(19) Europäisches Patentamt

European Patent Office

Office européen des brevets

(11) **EP 4 586 330 A1**

(12) **EUROPEAN PATENT APPLICATION**

(43) Date of publication:
**16.07.2025   Bulletin 2025/29**

(21) Application number: **24205890.7**

(22) Date of filing: **10.10.2024**

(51) International Patent Classification (IPC):
**H01M 4/04** (2006.01)      **B29D 7/01** (2006.01)
**H01M 4/139** (2010.01)

(52) Cooperative Patent Classification (CPC):
**H01M 4/043; H01M 4/0435; H01M 4/139**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **15.01.2024   CN 202410058130**
            **11.03.2024   PCT/CN2024/080981**

(71) Applicant: **Eve Energy Co., Ltd.**
**Huizhou, Guangdong 516006 (CN)**

(72) Inventors:
• **JIA, Qiang**
  **Huizhou, Guangdong 516006 (CN)**
• **ZHAO, Ruirui**
  **Huizhou, Guangdong 516006 (CN)**
• **REN, Ren**
  **Huizhou, Guangdong 516006 (CN)**
• **LI, Jianping**
  **Huizhou, Guangdong 516006 (CN)**
• **ZHOU, Siqiuyue**
  **Huizhou, Guangdong 516006 (CN)**

(74) Representative: **Murgitroyd & Company**
**165-169 Scotland Street**
**Glasgow G5 8PL (GB)**

(54)   **PREPARATION APPARATUS AND PREPARATION METHOD OF FILM**

(57)     The present disclosure provides a film preparation apparatus (100) and a preparation method thereof. The film preparation apparatus (100) includes a first film-forming structure (20) for pressing first fibrotic powders to obtain a first primary film; a second film-forming structure (40) for pressing second fibrotic powders to obtain a second primary film; a structure for combining films (50) disposed downstream of the first film-forming structure (20) and the second film-forming structure (40) for pressing the first primary film and the second primary film together to obtain a primary combined film; and a structure for thinning film (60) disposed downstream of the structure for combining films (50), and being used for rolling and thinning the primary combined film to obtain a target film with a target thickness.

**EP 4 586 330 A1**

**Description**

TECHNICAL FIELD

The present disclosure relates to the technical field of preparation apparatus of film, and in particular, to a preparation apparatus and a preparation method of film.

BACKGROUND

With growing global energy shortage and improvement of environmental protection awareness, the development of new energy has become the most important research direction in the current energy field. Lithium-ion battery has the advantages of high working voltage, no memory effect, small self-discharge and long cycle life, and have gradually become the development hotspot of the energy industry, and are widely used in various electronic products.

The preparation apparatus for a lithium-ion battery generally includes a preparation apparatus for a wet process and a preparation apparatus for a dry process. However, the active material layer on one side of the current collector obtained by the preparation apparatus is thin and the porosity is single, which cannot meet the demand for higher performance batteries.

SUMMARY

The present disclosure aims to solve the following technical problems: at present, when it is necessary to prepare a thick active material layer of the electrode sheet, it is mostly realized by wet multi-layer co-coating technology. However, the wet process is difficult to realize the ultra-thick electrode because of the limit crack thickness. Meanwhile, the coating is prone to produce mixed flowis easy to mix in the coating gap during coating, and layer mixing is easy to occur among multi-layer coatings. At the same time, the active material layer on one side of the current collector prepared by dry process or wet process has a single porosity, which limits the charge and discharge performance of the battery.

In a first aspect, the present disclosure provides a film preparation apparatus. The film preparation apparatus includes a first film-forming structure for pressing first fibrotic powders to obtain a first primary film; a second film-forming structure for pressing second fibrotic powders to obtain a second primary film; a structure for combining films disposed downstream of the first film-forming structure and the second film-forming structure for pressing the first primary film and the second primary film together to obtain a primary combined film; and a structure for thinning film disposed downstream of the structure for combining films, and is used for rolling and thinning the primary combined film to obtain a target film with a target thickness.

In a second aspect, the present disclosure provides a method of preparing a film. The method includes pressing first fibrotic powders through a first film-forming structure to obtain a first primary film; pressing second fibrotic powders through a second film-forming structure to obtain a second primary film; pressing the first primary film and the second primary film through a structure for combining films to obtain a primary combined film; and rolling and thinning the primary combined film through a structure for thinning film to obtain a target film with a target thickness.

The first fibrotic powders are pressed through a first film-forming structure to obtain a first primary film, and the second fibrotic powders are pressed through a second film-forming structure to obtain a second primary film, then the first primary film and the second primary film are pressed under the action of a structure for combining films to obtain a primary combined film. The primary combined film is then rolled and thinned through a structure for thinning film to obtain a target film with a target thickness required by us. Since the first fibrotic powders and the second fibrotic powders are fed respectively, the components in the first fibrotic powders and the second fibrotic powders can adopt different proportions, and the first film-forming structure and the second film-forming structure can adopt different parameters to press the fibrotic powders to form a primary combined film, so that the first primary film and the second primary film can have different thicknesses and compactness. In this way, the target film obtained by combining films can have two layers of films, which enables the target film to have a thicker thickness, and the two layers of films can have different porosities, thus realizing gradient porosity of the target film, and improving the energy density and the charge and discharge performance of the battery when a battery is prepared.

In a third aspect, the present disclosure provides a film. The film is prepared by using the film preparation apparatus mentioned in the first aspect through the method mentioned in the second aspect, wherein a thinness of the first primary film is different from that of the second primary film.

DESCRIPTION OF THE DRAWINGS

FIG. 1 is a schematic structural diagram of a film preparation apparatus according to some embodiments of the present disclosure.

FIGs. 2 and 3 are schematic diagrams of porosity and tortuosity of a target film prepared by the film preparation apparatus of FIG. 1.

FIG. 4 is a schematic flow chart of a method of preparing a film according to some embodiments of the present disclosure.

List of reference numbers:

100-film preparation apparatus, 11-first vibrating screen, 12-first movable tank, 20-first film-forming structure, 21-first roller, 31-second vibrating screen, 32-second movable tank, 40-second film-forming structure, 41-second roller, 50-structure for combining films, 51-roller for combining films, 60-structure for thinning film, 61-roller for thinning film, 70-first edge cutting structure, 71-first support roller, 72-first edge cutting knife, 73-first powder sucking nozzle, 74-first dust collecting box, 80-second edge cutting structure, 81-second support roller, 82-second edge cutting knife, 83-second powder sucking nozzle, 84-second dust collecting box, 90-speed detection device, 200-guide roller, 210-winding structure, 211-automatic monitoring corrector, 212-winding inflatable shaft.

EMBODIMENTS OF INVENTION

In the description of the present disclosure, it should be noted that, terms such as "above", "below", "front", "back", "left", "right", "vertical", "horizontal", "top", "bottom", "inside", "outside" refer to the orientation or positional relationship based on the illustration of the appended drawings, and are only for the purpose of facilitating and simplifying the description of the present disclosure, rather than indicating or implying that the apparatus or component referred to must have a particular orientation or must be configured or operated in a particular orientation, therefore should not be construed as a limitation towards the present disclosure.

The present disclosure will now be described in further detail with reference to the accompanying drawings.

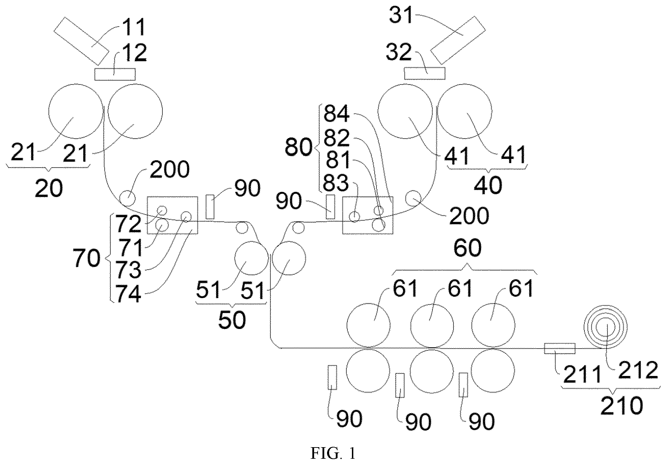

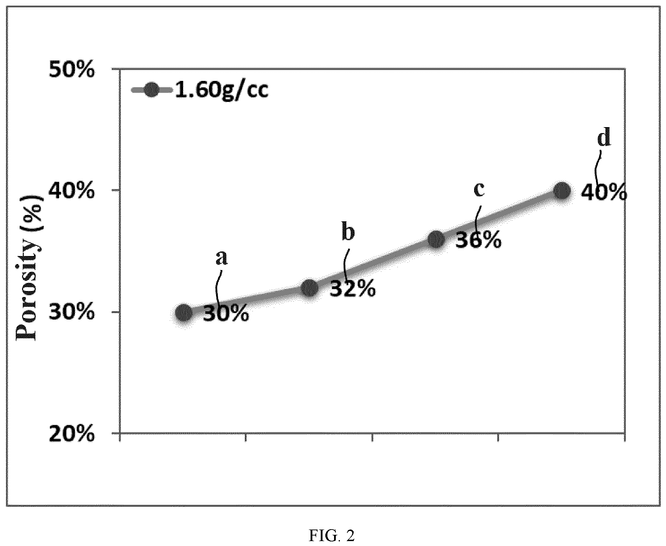

Referring to FIGs. 1 and 2, a film preparation apparatus 100 according to some embodiments of the present disclosure includes a first film-forming structure 20, a second film-forming structure 40, a structure for combining films 50, and a structure for thinning film 60.

The first film-forming structure 20 is used to press the first fibrotic powders to obtain the first primary film. The second film film-forming structure 40 is used to press the second fibrotic powders to obtain a second primary film. The structure for combining films 50 is disposed downstream of the first film-forming structure 20 and the second film-forming structure 40 for pressing the first primary film and the second primary film to obtain a primary combined film. The structure for thinning film 60 is disposed downstream of the structure for combining films 50 for rolling and thinning the primary combined film to obtain a target film with a target thickness.

By using the film preparation apparatus 100, the first fibrotic powders are pressed through the first film-forming structure 20 to obtain a first primary film, and the second fibrotic powders are pressed through the second film-forming structure 40 to obtain a second primary film, then the first primary film and the second primary film are pressed under the action of a structure for combining films 50 to obtain a primary combined film. The primary combined film is then rolled and thinned through a structure for thinning film 60 to obtain a target film with a target thickness required by us. Since the first fibrotic powders and the second fibrotic powders are fed respectively, the components in the first fibrotic powders and the second fibrotic powders can adopt different proportions, and the first film-forming structure 20 and the second film-forming structure 40 can adopt different parameters to press the fibrotic powders to form a primary combined film, so that the first primary film and the second primary film can have different thicknesses and compactness. In this way, the target film obtained by combining films can have two layers of films, which enables the target film to have a thicker thickness, and the two layers of films can have different porosities, thus realizing gradient porosity of the target film, and improving the energy density and the charge and discharge performance of the battery when a battery is prepared.

Specifically, the components of the first fibrotic powders and the second fibrotic powders in this embodiment are set to be the same, but the proportions of each component may be set to be different, so that the prepared target film can have the performance gradient porosity.

The component of the first fibrotic powders and the second fibrotic powders may include, but is not limited to, fibrotic powders, which is a combination of active materials, conductive agents and binders, formed by applying a shear force to the active materials, the conductive agents, and the binders. The active material may be positive electrode materials such as lithium iron phosphate, lithium nickel cobalt manganate, lithium cobalt phosphate, or a combination of one or more of graphite and/or silicon-oxygen/silicon-carbon negative electrode materials. The conductive agent includes, but is not limited to, a combination of one or more of conductive carbon black, carbon nanotubes, graphene, and the like. Binder includes, but is not limited to, a combination of one or more of polytetrafluoroethylene, tetrafluoroethylene, polyacrylic acid, carboxymethylcellulose, polyethylene glycol, polyvinyl pyrrolidone, and the like.

Referring to FIG. 1, in order to facilitate feeding of the first film-forming structure 20, the film preparation apparatus 100 in this embodiment further includes a first vibrating screen 11 and a first movable tank 12 disposed below the first vibrating screen 11. The first vibrating screen 11 is configured to receive the first fibrotic powders and convey the first fibrotic powders to the first movable tank 12. The first movable tank 12 is configured to receive the first fibrotic powders conveyed by the first vibrating screen 11 and convey the first fibrotic powders to the first film-forming structure 20. Further, the first movable tank 12 can be switchable between a vertical state and a horizontal state. In this way, after the powders fall onto the first vibrating screen 11, the first vibrating screen 11 vibrates to gradually drop the powders onto the first movable tank 12 through the first vibrating screen 11. The first movable tank 12 can be gradually adjusted from the vertical state to the horizontal state to move the powders, so as to gradually drop the powders, and adjust the dropping speed the powders at the same time, thus avoiding the accumulation or agglomeration of the powders, and adjusting the film forming speed at the same time.

Specifically, the first vibrating screen 11 includes two layers of first screens disposed from top to bottom. The first fibrotic powders fall down from the screen holes of the first screen, then fall into the first movable tank 12, and are sent out from the first movable tank 12. The falling speed of the first fibrotic powders can be adjusted by disposing two layers of first screens in the first vibrating screen 11.

Similarly, in order to facilitate feeding of the second film-forming structure 40, the film preparation apparatus 100 in this embodiment further includes a second vibrating screen 31 and a second movable tank 32 disposed below the second vibrating screen 31. The second vibrating screen 31 is configured to receive the second fibrotic powders and convey the second fibrotic powders to the second movable tank 32. The second movable tank 32 is configured to receive the second fibrotic powders conveyed by the second vibrating screen 31 and convey the second fibrotic powders to the second film-forming structure 40. Further, the second movable tank 32 can be switchable between a vertical state and a horizontal state. In this way, after the powders fall onto the second vibrating screen 31, the second vibrating screen 31 vibrates to gradually drop the powders onto the second movable tank 32 through the second vibrating screen 31. The second movable tank 32 can be gradually adjusted from the vertical state to the horizontal state to move the powders, so as to gradually drop the powders, and adjust the dropping speed the powders at the same time, thus avoiding the accumulation or agglomeration of the powders, and adjusting the film forming speed at the same time.

Specifically, the second vibrating screen 31 includes two layers of second screens disposed from top to bottom. The second fibrotic powders fall down from the screen holes of the second screen, then fall into the second movable tank 32, and are sent out from the second movable tank 32. The falling speed of the second fibrotic powders can be adjusted by disposing two layers of first screens in the second vibrating screen 31.

Referring to FIG. 1, the first film-forming structure 20 includes a pair of first rollers 21 oppositely disposed, and each of the pair of first rollers has a roll diameter of d1 and a pressure of t1. The second film-forming structure 40 includes a pair of second rollers 41 oppositely disposed, and each of the pair of the second rollers has a roll diameter of d2 and a pressure of t2. Specifically, $d2>d1$, $t2>t1$,

Since the roller has a first component force parallel to the extension direction of the film and a second component force perpendicular to the extension direction of the film when pressing the film. By setting the second roller 41 with a larger roll diameter and greater pressure, the weight of the second roller 41 can be larger. At the same time, combing with the pressure exerted on the second roller 41, a larger component force in the vertical direction can be applied to the film when the powders are pressed into a film. In this way, the pressing pressure applied to the second fibrotic powders is greater than that applied to the first fibrotic powders, so that the obtained first primary film and the second primary film can have different thicknesses and compactness, thus achieving the effect of gradient porosity during subsequent combining films.

Specifically, the roll diameter and the pressure of the first roller 21 and the second roller 41 in this embodiment are set as follows: $10\ cm \leq d2 \leq 30\ cm$, $8\ cm \leq d1 \leq 28\ cm$; $1\ ton \leq t2 \leq 5$ tons, $0.8\ tons \leq t1 \leq 4.5$ tons. For example, d2 may be set to be a value such as 10 cm, 15 cm, 20 cm, 25 cm or 30 cm; d1 may be set to be a value such as 8 cm, 10 cm, 15 cm, 20 cm, 25 cm, or 28cm, which is not limited herein, as long as they satisfy $d2>d1$. For example, t2 may be set to be a value such as 1 ton, 2 tons, 3 tons, 4 tons, or 5 tons, and t1 may be set to be a value such as 0.8 tons, 1 ton, 2 tons, 3 tons, 4 tons, or 4.8 tons, which is not limited herein, as long as they satisfy $t2>t1$.

In this way, the first roller 21 and the second roller 41 press respectively the powders to obtain the primary film. At the same time, by setting the second roller 41 with larger roll diameter and pressure and setting the first roller 21 with smaller roll diameter and pressure, the thickness and compactness of the first primary film and second primary film obtained preliminarily are different, so that the film with gradient porosity can be obtained in the final product.

Referring to FIG. 1, the structure for combining films in this embodiment includes a pair of roller for combining films 51 oppositely disposed, and each of the pair of first rollers 51 has a roll diameter of d3 and a pressure of t3. The structure for thinning film 60 includes at least one pair of rollers for thinning film 61 that are oppositely disposed, and each of the pair of rollers for thinning film 61 has a roll diameter of d4 and a pressure of t4, wherein $d4>d3$, $t4>t3$, and $d2>d1>d4>d3$, $t2>t1>t4>t3$. That is, the roller diamet and the pressure in the film-forming stage are greater than those intermittently used in subsequent steps of combining films and thinning films, so that the roller for combining films 51 with a smaller roll diameter combines the first primary film and the second primary film at a lower pressure to obtain a primary combined film. Furthermore, the film is stretched and becomes longer through the rolling and pressing of the roller for combining films 51, and the roller for combining films 51 needs a larger linear speed to drive the film to move and tension. In this way, the roller for combining films 51 can have a larger linear speed by providing roller for combining films 51 with a smaller roll diameter and a lower pressure, so that the primary combined film can be pushed back at a faster speed, thus achieving the effect of improving the production efficiency. Subsequently, the thickness and compactness are finely adjusted by the rollers for thinning film 61. Since the structure for thinning film 60 includes at least one pair of rollers for thinning 61, that is, the structure for thinning film 60 may include a plurality of pairs of rollers for thinning film 61, each of the rollers for thinning film 61 can adapt a smaller roll diameter and pressure, so that the thickness and the compactness of the film can be finely adjusted. Therefore, by setting d2>d1>d4>d3, t2>t1>t4>t3, the powders can be pressed into a film by the first roller 21 and the second roller 41 with a larger roll diameter and pressure, and the thickness and the compactness can be adjusted sequentially by the subsequent rollers for combining films 51 and the rollers for thinning film 61.

Specifically, d4, d3, t4 and t3 are set as follows: 7 cm≤d4≤25 cm, 5 cm≤d3≤20 cm, 0.6 tons ≤t4≤4 tons, 0.5 tons ≤t3≤3.5 tons. For example, d4 may be set to be a value of 7cm, 10 cm, 12cm, 15 cm, 18cm, 20 cm, or 25 cm, and d3 may be set to be a value of 5 cm, 10 cm, 12cm, 15 cm, 18cm, 20 cm, or the like; t4 may be set to be a value of 0.6 tons, 1 ton, 2 tons, 3 tons, 4 tons, or the like; and t3 may be set to be a value of 0.5 tons, 1 tons, 2 tons, 2.5 tons, 3 tons, 3.5 tons, or the like, which is not limited herein, as long as they satisfy d2>d1>d4>d3 and t2>t1>t4>t3.

Further, when setting the temperatures of the first roller 21, the second roller 41, the roller for combining films 51, and the roller for thinning film 61, according to different compositions of the first fibrotic powders and the second fibrotic powders, the temperature T1 of the first roller 21 and the temperature T2 of the second roller 41 may be equal to the temperature T3 of the roller for combining films 51, or both T1 and T2 may be greater than the temperature T3 of the roller for combining films 51, so that the first roller 21 and the second roller press the fibrotic powders into a film at a higher temperature, and then the thickness and compactness of the first primary film and the second primary film are slowly adjusted under the adjustment of the roller for combining films 51 at a lower temperature.

Specifically, T1 ranges from 0 °C to 200 °C, T2 ranges from 0 °C to 200°C, and each of the first rollers 21 and the second rollers 41 can individually control the heating temperature. T3 ranges from 0 °C to 150 °C, and the temperature of each of the rollers for combining films 51 can be individually controlled. In this way, in the two oppositely disposed rollers, the temperature of each roller is set to be individually controllable, so that the two oppositely disposed rollers can roll and press the films on opposite sides of the rollers for combining films 51, so as to produce films with different ductility. The temperature T4 of the rollers for thinning film 61 is set between 0 °C and 200 °C, and each of the rollers for thinning film 61 can individually control the temperature, and the temperature difference between the two oppositely disposed rollers is less than 3 °C.

Further, in order to enable the rollers for thinning 61 to adjust the thickness and the compactness of the primary combined film to a desired thickness, the structure for thinning film 60 in this embodiment includes three pairs of rollers for thinning film 61. Since the thickness and the compactness of the film are adjusted by a plurality of pairs of thinning rollers 61, the pressure and the roll diameter of each of the rollers for thinning film 61 in this embodiment are smaller than those of the first roller 21 and the second roller 22, and the need for adjusting the thickness and the compactness has been achieved.

The thickness of the first primary film obtained in this embodiment ranges from 0.1 mm to 0.5mm; the thickness of the second primary film obtained in this embodiment ranges from 0.1 mm to 0.5 mm; and the thickness of the target film ranges from 0.2 mm to 1.0 mm. Further, after the rolling and pressing of the rollers for combining films 51, and adjustment of the rollers for thinning film 61, the total thickness of the first primary film and the second primary film ranges from 0.2 mm to 1.0 mm, thus achieving the effects of gradient porosity and ultra-thick thickness of the target film.

Further, referring to FIG. 1, in order to ensure the flatness of the edge of the formed film, the film preparation apparatus 100 in this embodiment further includes a first edge cutting structure 70 and a second edge cutting structure 80. The first edge cutting structure 70 is disposed between the first rollers and the rollers for combining films 50 for cutting edges of the first primary film; the second edge cutting structure 80 is used for cutting edges of the second primary film. In this way, the edges of the initially formed first primary film and the initially formed second primary film are cut through the arrangement of the first edge cutting structure 70 and the second edge cutting structure 80, so that the edges of the films before being combined can have a certain flatness, and the first primary film and the second primary film can be adjusted to have the same width, which facilitates the flatness of the edges of the initially formed primary combined film obtained after combing films, and winding can be carried out directly after adjustment of the thickness and the compactness.

Specifically, referring to FIG. 1, the first edge cutting structure 70 includes a first support roller 71, a first edge cutting knife 72, a first powder sucking nozzle 73 and a first dust collecting box 74. The first support roller 71 is used for supporting the first primary film. The first edge cutting knife 72 is used for cutting the edges of the first primary film. The first powder sucking nozzle 73 is used for sucking away the debris and dust generated during the cutting process of the first edge cutting knife 72. The first dust collecting box 74 is used for collecting the debris and dust absorbed by the powder sucking nozzle. In this way, in this step, the first support roller 71 is used to support and pull the film, and the first edge cutting knife 72 is used to adjust the flatness of the primary film. At the same time, the powders and debris are prevented from flying into the environment through adsorption of the first powder sucking nozzle 73 and collection of the dust collecting box.

The second edge cutting structure 80 includes a second support roller 81, a second edge cutting knife 82, a second powder sucking nozzle 83 and a second dust collecting box 84. The second support roller 81 is used for supporting the second primary film. The second edge cutting knife 82 is used for cutting the edges of the second primary film. The second powder sucking nozzle 83 is used for sucking away the debris and dust generated during the cutting process of the second edge cutting knife 82. The second dust collecting box 84 is used for collecting the debris and dust absorbed by the powder sucking nozzle. In this step, the second support roller 81 is used to support and pull the film, and the second edge cutting knife 82 is used to adjust the flatness of the primary film. At the same time, the powders and debris are prevented from flying into the environment through adsorption of the second powder sucking nozzle 83 and collection of the dust collecting box.

In addition, referring to FIG. 1, in order to monitor the traveling speed of each roller to ensure the forming quality of the film, the film preparation apparatus 100 further includes a plurality of speed detection devices 90. The plurality of speed detection devices 90 are disposed in an advancing direction of the pair of first rollers 11, an advancing direction of the second rollers 41, an advancing direction of the rollers for combining films 51, and an advancing direction of the rollers for thinning film 61, respectively, for monitoring the advancing speeds of the first rollers 11, the second rollers 41, the roller for combining films 51, and the roller for thinning film film 61, respectively. In this way, the traveling speeds of the first rollers, the second rollers 41, the rollers for combining films 51, and the roller for thinning film 61 are monitored by the speed detection devices 90 to adapt to the traveling speed of the film, thereby avoiding the occurrence of protrusions and wrinkles on the film, and ensuring the forming quality of the film.

Further, in order to ensure normal traveling of the film, the film preparation apparatus 100 further includes a plurality of guide rollers 200 to realize pulling, supporting, and reversing of the traveling of the first primary film, the second primary film, the primary combined film, and the target film.

Further, the film preparation apparatus 100 in this embodiment further includes a winding structure 210 for realizing the winding of the target film. The winding structure 210 includes an automatic monitoring corrector 211 and a winding inflatable shaft 212. The automatic monitoring corrector 211 is used to adjust the tension of the film to prevent the film from breaking. The winding inflatable shaft 212 rotates to realize the winding of the target film.

When the compactness of the film is equal to 1.6 g/cc, the porosity of the film obtained according to different process stages ranges from 32% to 40%. That is, the porosity of the first primary film, the second primary film, the primary combined film, and the target film ranges from 32% to 40%, and the porosity of the first primary film or the second primary film, the primary combined film, and the target film increases sequentially. The tortuosity of the film obtained at different process stages ranges from 1.8 to 2.6. That is, the tortuosity of the first primary film, the second primary film, the primary combined film, and the target film ranges from 1.8 to 2.6, and the tortuosity of the first primary film or the second primary film, the primary combined film and the target film decreases sequentially.

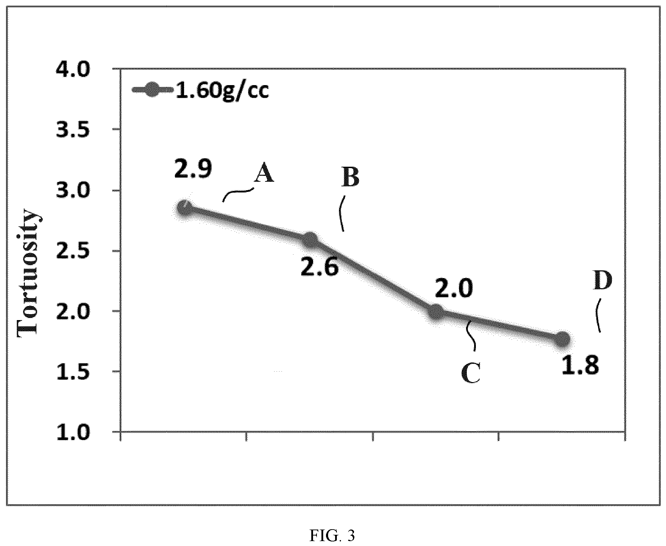

FIG. 2 and FIG. 3 show the comparison of the porosity and tortuosity of the films obtained at different process stages in this embodiment and the porosity and tortuosity of the films prepared by the processes in the prior art.

The porosity parameters of the films obtained at different stages in this embodiment are shown in FIG. 2, wherein the porosity at point a is the porosity of the film prepared by the process in the prior art, the porosity at point b is the porosity of the primary combined film obtained after the first primary film and the second primary film are combined by the roller for combining films 51, the porosity at c point is the porosity of the film obtained after being thinned by one pair of rollers for thinning film 61, and the porosity at d point is the porosity of the target film obtained after being thinned by three pairs of rollers for thinning film 61. The tortuosity parameters of the films obtained at different stages are shown in FIG. 3, wherein the tortuosity at point A is the tortuosity of the film prepared by the process in the prior art, the tortuosity at point B is the tortuosity of the primary combined film obtained after the first primary film and the second primary film are combined by the roller for combining films 51, the tortuosity at point C is the tortuosity of the film obtained after being thinned by one pair of rollers for thinning film 61, and the tortuosity at point D is the tortuosity of the target film obtained after being thinned by a plurality of pairs of rollers for thinning film 61.

As can be seen from FIGs. 2 and 3, the single-layer film prepared by a conventional dry process has a minimum porosity 30% and a maximum tortuosity of 2.9.

A layer of a thick electrode sheet combined by the roller for combining films 51 is subject to a conventional thinning process to obtain a electrode sheet. Test results show that the electrode sheet has a porosity of 32% and a maximum tortuosity of 2.6. It shows that the characteristic parameters of the thick film prepared by the roller for combining films 51 are superior to those of the thick film prepared by the conventional process.

After the primary combined film is thinned by one pair of rollers for thinning film 61, it is tested, and the porosity and tortuosity are 36% and 2, respectively, indicating that the performance of the obtained film is effectively improved after the primary combined film is thinned by the rollers for thinning film 61.

The porosity and the tortuosity of the target film prepared by using a plurality of pairs of rollers for thinning film 61 are 40% and 1.8, respectively.

According to the above data, the film finally obtained has a superior porosity and tortuosity by combining the first primary film and the second primary film through the rollers for combining films 51 and thinning through the rollers for thinning film 61 in this embodiment. In thick electrodes, the effective porosity and the tortuosity of the electrode sheets are important performance parameters of the lithium-ion battery electrode sheet, which can effectively evaluate the rate performance (lithium separation thickness and rate) and the cycle rate of the lithium-ion battery. The greater the porosity and the smaller the tortuosity, the more conducive it is to improving the liquid absorption of the electrode sheet, and the more beneficial it is to the thick electrode lithium-ion battery. Therefore, the film prepared in this embodiment effectively improves the electrochemical performance of subsequent batteries.

By using the film preparation apparatus 100, the first fibrotic powders are fed by the first vibrating screen 11 and the first movable tank 12, so as to be pressed through the first film-forming structure 20 to obtain a first primary film. The second fibrotic powders are fed by the second vibrating screen 31 and the second movable tank 32, so as to be pressed through the second film-forming structure 40 to obtain a second primary film. Then the first primary film and the second synthetic film are pressed under the action of the structure for combining films 50 to obtain a primary combined film. The primary combined film is then rolled and thinned through a structure for thinning film 60 to obtain a target film with a target thickness required by us. Since the first fibrotic powders and the second fibrotic powders are fed separately, the components in the first fibrotic powders and the second fibrotic powders can adopt different proportions, and the first film-forming structure 20 and the second film-forming structure 40 can adopt different parameters to press the fibrotic powders to form a primary combined film, so that the first primary film and the second primary film can have different thicknesses and compactness. In this way, the target film obtained by the final combination can have two layers of films, which enables the target film to have a thicker thickness, and each layer of films can have different porosity and compactness, thus realizing the effect of gradient porosity, and improving the energy density and the charge and discharge performance of the battery when a battery is prepared.

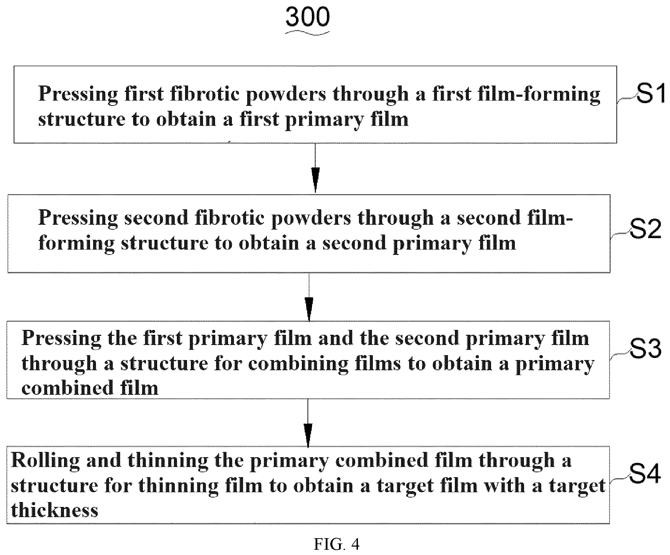

In a second embodiment, the present disclosure further provides a method 300 of preparing a film. Referring to FIG. 4, the method includes:

S1, pressing first fibrotic powders through a first film-forming structure 20 to obtain a first primary film;

S2, pressing second fibrotic powders through a second film-forming structure 40 to obtain a second primary film;

S3, pressing the first primary film and the second primary film through a structure for combining films 50 to obtain a primary combined film; and

S4, rolling and thinning the primary combined film through a structure for thinning film 60 to obtain a target film with a target thickness.

**Claims**

1. A film preparation apparatus (100), **characterized in that** the film preparation apparatus (100) comprises:

   a first film-forming structure (20) for pressing first fibrotic powders to obtain a first primary film;
   a second film-forming structure (40) for pressing second fibrotic powders to obtain a second primary film;
   a structure for combining films (50) disposed downstream of the first film-forming structure (20) and the second film-forming structure (40) for pressing the first primary film and the second primary film together to obtain a primary combined film; and
   a structure for thinning film (60) disposed downstream of the structure for combining films (50), and being used for rolling and thinning the primary combined film to obtain a target film with a target thickness.

2. The film preparation apparatus (100) according to claim 1, **characterized in that**

   the first film-forming structure (20) comprises a pair of first rollers (21) oppositely disposed, and each of the pair of first rollers (21) has a roll diameter of d1;
   the second film-forming structure (40) comprises a pair of second rollers (41) oppositely disposed, and each of the second rollers (41) has a roll diameter of d2; and
   wherein, d2>d1.

3. The film preparation apparatus (100) according to claim 2, **characterized in that** 10 cm≤d2≤30 cm, 8 cm≤d1≤28 cm.

4. The film preparation apparatus (100) according to claim 2 or 3, **characterized in that**

   a pressure of each of the pair of first rollers (21) is t1;
   a pressure of each of the second rollers (41) is t2; and
   wherein t2>t1.

5. The film preparation apparatus (100) according to claim 4, **characterized in that** 1 ton≤t2≤5 tons, and 0.8 tons≤t1≤4.5 tons.

6. The film preparation apparatus (100) according to claim 4, **characterized in that**

the structure for combining films (50) comprises a pair of rollers for combining films (51) that are oppositely disposed, and each of the pair of rollers for combining films (51) has a roll diameter of d3 and a pressure of t3;
the structure for thinning film (60) comprises at least a pair of rollers for thinning film (61) that are oppositely disposed, and each of the pair of rollers for thinning film (61) has a roll diameter of d4 and a pressure of t4; and
wherein d4>d3, t4>t3, and d2>d1>d4>d3, t2>t1>t4>t3.

7. The film preparation apparatus (100) according to claim 6, **characterized in that**

$$7cm \leq d4 \leq 25 \text{ cm}, \ 5 \text{ cm} \leq d3 \leq 20 \text{ cm};$$

$$0.6 \text{ ton} \leq t4 \leq 4 \text{ tons}, \ 0.5 \text{ tons} \leq t3 \leq 3.5 \text{ tons}$$

8. The film preparation apparatus (100) according to any one of claims 1 to 7, **characterized in that** a thickness of the first primary film ranges from 0.1 mm to 0.5 mm, a thickness of the second primary film ranges from 0.1 mm to 0.5 mm; and a thickness of the target film ranges from 0.2 mm to 1.0 mm.

9. The film preparation apparatus (100) according to any one of claims 1 to 8, **characterized in that** the film preparation apparatus (100) further comprises a first vibrating screen (11) and a first movable tank (12), wherein the first vibrating screen (11) is used for receiving the first fibrotic powders and conveying them to the first movable tank (12); the first movable tank (12) is used for receiving the first fibrotic powders conveyed by the first vibrating screen (11) and conveying them to the first film-forming structure (20), and first movable tank (12) is switchable between a vertical state and a horizontal state.

10. The film preparation apparatus (100) according to any one of claims 1 to 9, **characterized in that** the film preparation apparatus (100) further comprises a second vibrating screen (31) and a second movable tank (32), wherein the second vibrating screen (31) is used for receiving the second fibrotic powders and conveying them to the second movable tank (32); the second movable tank (32) is used for receiving the second fibrotic powders conveyed by the second vibrating screen (31) and conveying them to the second film-forming structure (40), and second movable tank (32) is switchable between a vertical state and a horizontal state.

11. The film preparation apparatus (100) according to any one of claims 6 to 10, **characterized in that** the film preparation apparatus (100) further comprises a plurality of speed detection devices (90) for monitoring a forward velocity of each of the pair of first rollers (21), a forward velocity of each of the pair of second rollers (41), a forward velocity of each of the pair of rollers for combining films (51), and a forward velocity of each of the pair of rollers for thinning film (61), respectively.

12. The film preparation apparatus (100) according to any one of claims 1 to 11, **characterized in that** a porosity of the first primary film ranges from 32% to 40%, a porosity of the second primary film ranges from 32% to 40%, a porosity of the primary combined film ranges from 32% to 40%, and a porosity of the target film ranges from 32% to 40%, and the porosity of the first primary film or the second primary film, the primary combined film, and the target film increases sequentially.

13. The film preparation apparatus (100) according to any one of claims 1 to 12, **characterized in that** a tortuosity of the first primary film ranges from 1.8 to 2.6, a tortuosity of the second primary film ranges from 1.8 to 2.6, a tortuosity of the primary combined film ranges from 1.8 to 2.6, and a tortuosity of the target film ranges from 1.8 to 2.6, and the tortuosity of the first primary film or the second primary film, the primary combined film and the target film decreases sequentially.

14. The film preparation apparatus (100) according to any one of claims 8 to 14, **characterized in that** the thickness of the first primary film is different from the thickness of the second primary film.

15. A film, **characterized in that** the film is prepared by using the film preparation apparatus (100) according to claims 1 to 8, wherein a thinness of the first primary film is different from that of the second primary film.

FIG. 1

FIG. 2

FIG. 3

300

| Pressing first fibrotic powders through a first film-forming structure to obtain a first primary film | S1 |

| Pressing second fibrotic powders through a second film-forming structure to obtain a second primary film | S2 |

| Pressing the first primary film and the second primary film through a structure for combining films to obtain a primary combined film | S3 |

| Rolling and thinning the primary combined film through a structure for thinning film to obtain a target film with a target thickness | S4 |

FIG. 4

Europäisches
Patentamt

European
Patent Office

Office européen
des brevets

# EUROPEAN SEARCH REPORT

**Application Number**

EP 24 20 5890

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 482 697 B2 (ENPOWER INC [US]) 25 October 2022 (2022-10-25) | 15 | INV. H01M4/04 B29D7/01 H01M4/139 |
| Y | * figures 3, 6 * * column 12, line 29 - column 14, line 58 * | 1-14 | |
| X | CN 217 444 427 U (SUNWODA ELECTRIC VEHICLE CELL CO LTD) 16 September 2022 (2022-09-16) * figure 5 * * paragraphs [0052] - [0056] * | 1-15 | |
| Y | CN 116 724 405 A (LG ENERGY SOLUTION LTD) 8 September 2023 (2023-09-08) * figure 1 * * claims 1-3 * | 1-14 | |

**TECHNICAL FIELDS SEARCHED (IPC)**

H01M
B29D

The present search report has been drawn up for all claims

| Place of search | Date of completion of the search | Examiner |
|---|---|---|
| The Hague | 21 March 2025 | Gomes Pinto F., R |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**EP 4 586 330 A1**

## ANNEX TO THE EUROPEAN SEARCH REPORT
## ON EUROPEAN PATENT APPLICATION NO.

EP 24 20 5890

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2025

| Patent document cited in search report | | Publication date | Patent family member(s) | | Publication date |
|---|---|---|---|---|---|
| US 11482697 | B2 | 25-10-2022 | DE 102021130262 A1 | | 25-05-2022 |
| | | | US 2022166000 A1 | | 26-05-2022 |
| | | | US 2022293907 A1 | | 15-09-2022 |
| | | | US 2024396002 A1 | | 28-11-2024 |
| CN 217444427 | U | 16-09-2022 | NONE | | |
| CN 116724405 | A | 08-09-2023 | CN 116724405 A | | 08-09-2023 |
| | | | EP 4261919 A1 | | 18-10-2023 |
| | | | JP 2024504154 A | | 30-01-2024 |
| | | | KR 20230091674 A | | 23-06-2023 |
| | | | US 2024170631 A1 | | 23-05-2024 |
| | | | WO 2023113297 A1 | | 22-06-2023 |

EPO FORM P0459

For more details about this annex : see Official Journal of the European Patent Office, No. 12/82